# EUROPEAN PATENT APPLICATION

(11) **EP 2 868 978 A1**
(43) Date of publication of application: **06.05.2015**
(21) Application number: 14189125.9
(22) Date of filing: 16.10.2014
(51) Int. Cl.: F24C 7/08

(54) **A domestic appliance fitted with a button socket**

(30) Priority: 30.10.2013 TR 201312560
(71) Applicant: BSH Hausgeräte GmbH, 81739 München (DE)
(72) Inventor: Eksat, Seniz, 34535 ISTANBUL (TR); Gögce, Aras, 34710 ISTANBUL (TR); Sürer, Sevgi, 59850 TEKIRDAG (TR)

(57) **Abstract**

The invention is a domestic appliance (1) comprising a control panel (11) and, fixed to the control panel (11), a button socket (2) which houses an adjustment button (3) which passes through an opening (110) on the control panel (11). In order to provide firm fixing and locking of the button socket (2) of the domestic appliance in the control panel (11), the control panel (11) includes at least one lug (111) possessing at least one locking guide (112) projecting inward from a periphery of the opening (110) of the control panel (11); and a projection (24) which passes into the locking guide (112) on the lug (111), being formed on a periphery (26) of the button socket (2) to engage with the lug (111).

## Description

The invention relates to domestic appliances with an adjustment button, for switching or adjusting elements such as electronic switches, valves, switches etc., fitted to a control panel by means of a button socket.

Adjustment buttons on the control panel of domestic appliances in the field concerned are operated manually, being depressed when pressed in and emerging when pressed a second time. The first movement of the adjustment button is linear, while the second movement is a turning around its own axis. The adjustment button may itself be a simple or complex structure. In addition to the adjustment button, there is a button socket structure which permits the adjustment button to fit in the control panel ready for operation. The button sockets usually comprise more than one element.

Adjustment buttons used on domestic appliances in the current state of the art are used in gas- and electricity-operated cooker-tops. The adjustment buttons control a switching element such as a valve or switch. In gas-operated cookers/cooker-tops the gas is conveyed to the burners by gas taps. Gas taps are controlled with the assistance of adjustment buttons accessible to the user. The gas taps have a switch and a tap stem which fits into the center of the adjustment button.

The pushable adjustment buttons used on most cookers and ovens also have application in domestic appliances such as washing machines and dishwashers. The labor and assembly time for fitting button socket components to the control panel for this kind of button is directly proportional to the number, form and complexity of the components.

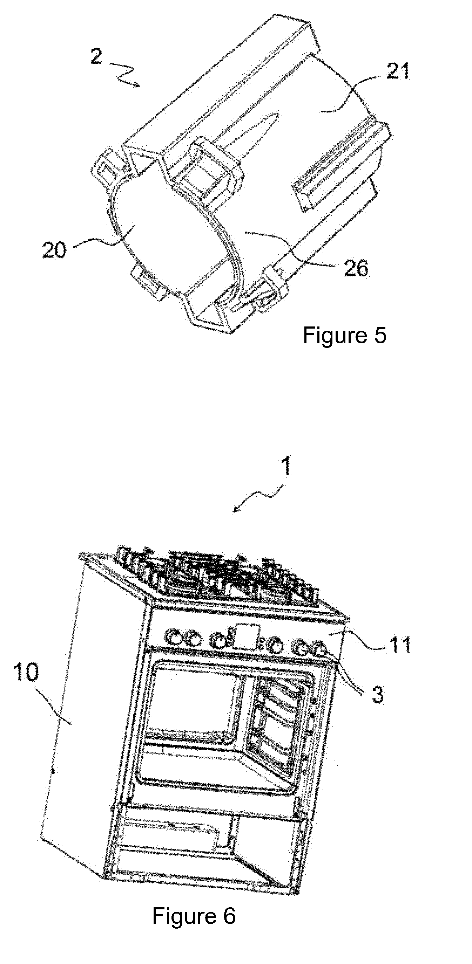

Figure 5 is a perspective view from the front of a button socket in previous technique. In such structures, the diameter of the mouth of the button socket may not fit the control panel opening. Because of the projecting and recessed shapes which make up the periphery of the button socket, the diameter of the mouth of the button socket exceeds the diameter of the opening on the control panel and projects from it. Using additional elements in this section permits the button socket to fit the control panel, and also ensures that the uncovered parts are covered.

One of the applications in the known state of the art can be seen in patent number TR200800140. This invention concerns a cooking apparatus, preferably a domestic appliance, which permits gas or electrical actuators such as valves or electric switches, which permit the flow of energy to electrical or gas cooker-tops on a cooker top panel, to be easily mounted on the cooker top panel, and the parts of the buttons on the panel which lie behind the panel to be easily fitted. The mounting plate fitted to the actuator renders the rear face of the button housing mountable on the actuator. For example, this can be accomplished by a snap-fit or grip component.

The purpose of the invention is to provide tight fixing of a button socket into a control panel without the need for an additional element.

In order to achieve the said purpose, the invention is a domestic appliance which has a control panel and a button socket fixed to the control panel in order to house an adjustment button which passes through an opening on the control panel. The domestic appliance includes at least one lug with at least one locking guide in the form of a protrusion extending inward from the periphery of the opening of the control panel, and a projection which is formed on the periphery of the button socket which passes into a locking guide on a lug in order to engage with the lug in order to achieve tight fixing and locking of the button socket onto the control panel. Thus the fixing of the button socket on the control panel is achieved without requirement for any additional elements and without major differences between mouth diameters. It permits the person carrying out the assembly manually to fit the button socket into the control panel without using any tools.

One embodiment of the invention includes two projections formed on the periphery of the button socket of the domestic appliance and two lugs formed at such a distance from one another on the periphery of the opening of the control panel that they radially coincide with the two projections on the periphery of the button socket. Thus compatibility of the lugs with the circular button socket ensures that the button socket is locked when turned, and achieves a sound lock.

In another embodiment of the invention, there is a locking section, partially separated from the body, formed by a cut-out from the body of the button socket in order to provide flexibility to an area formed on the periphery of a button socket of a domestic appliance which has a projection. Thus, during the fixing of the button socket to the control panel, the locking sections of the button socket flex to engage with the lugs of the control panel.

In another embodiment of the invention, the locking section and the lugs are formed in such a way that they flex to coincide with each other. Thus, the dimensions of the lugs will not exceed the cut-out area of the button socket, and no fixing problem associated with differences in diameter will arise.

In another embodiment of the invention, the projection on the locking section is circular. Thus the projection easily travels through the locking guide.

In another embodiment of the invention, the button socket includes a flange formed around the mouth section of the same which restricts the linear axial movements of the button socket. This ensures that the mouth section of the button socket and the mouth section of the control panel opening are approximately at the same level. The flange, meanwhile, restricts the movement of the button socket on the linear axis.

In another embodiment of the invention, the flange includes an angled section with an angle which reduces outward from the mouth section. This ensures that any gap arising from a discrepancy in diameter between the mouth section of the button socket and the mouth section of the control panel is covered.

In another embodiment of the invention, the locking guide on the lug is in the shape of a letter "L". Thus it is ensured that once the projection has entered the locking guide, it is locked in the locking guide in a manner which ensures that it will not easily come out.

In another embodiment of the invention, the locking guide includes an entry opening and a tolerance opening which continues in a manner which is at an angle to the entry opening. Thus it is ensured that once the projection has entered the locking guide, it is locked.

In another embodiment of the invention, the length of the tolerance opening is formed in such a way that it is longer on the linear axis than the length of the entry opening. Thus it is ensured that once the projection has entered the locking guide, it moves backward or forward within the tolerance opening, within the flexible tolerance range of the flange, and locking is ensured.

In another embodiment of the invention, the button socket is one-piece. Thus materials and labor costs are reduced. The duration of the labor process is also shortened.

In another embodiment of the invention, the control panel with lugs is one-piece. Thus materials and labor costs are reduced. The duration of the labor process is also shortened.

In another embodiment of the invention, the said domestic appliance is a cooker-top.
- Figure 1: is a perspective view from the front of the button socket for a domestic appliance which is the subject of the invention.
- Figure 2: is a two-dimensional side view of the button socket for a domestic appliance which is the subject of the invention.
- Figure 2a: is a cross section of the area marked 2a on Figure 2.
- Figure 3: is a perspective view from the front of the control panel which is the subject of the invention, in which the button socket of a domestic appliance is to be fixed.
- Figure 4: is a detail of a control panel such as that in Figure 3.
- Figure 5: is a perspective view from the front of a button socket in previous technique.
- Figure 6: is a perspective view from the front of a domestic appliance which is an oven with a cooker-top.

The invention concerns a domestic appliance (1), the control panel (11) of which is equipped with an adjustment button (3) fitted in an opening (110) in the control panel (11) by means of a button socket (2). The carcass (10) of the domestic appliance (1) is equipped with a front control panel (11) accessible from the front in particular (Figure 6).

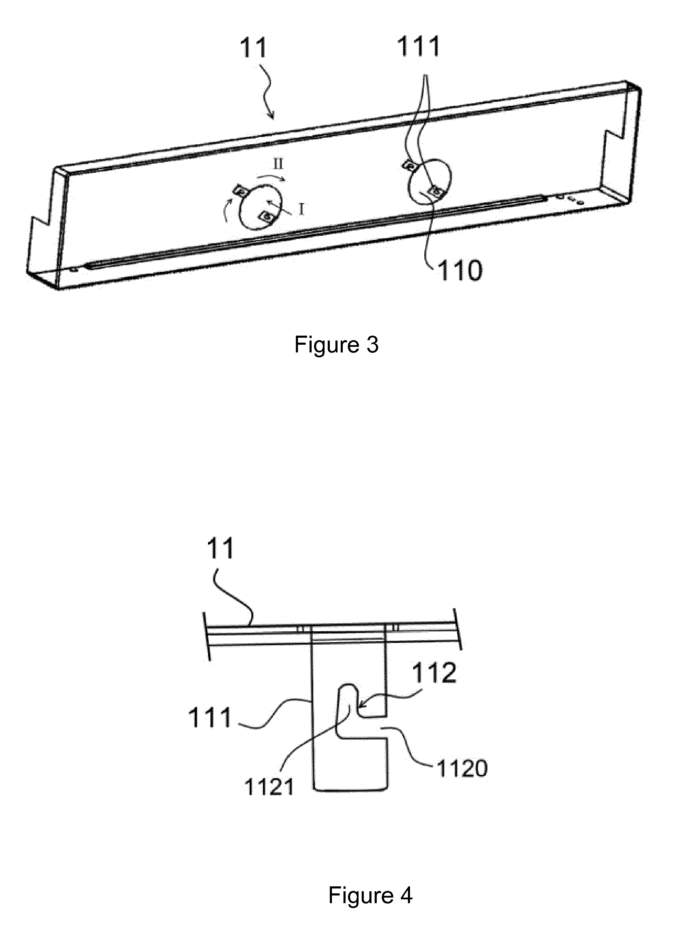

An opening (110) is created on the control panel (11) for each button socket (2) (Figure 3). The button sockets (2) are fixed by fitting them to the openings (110). The adjustment button (3) is attached to the button socket (2). The button sockets (2) are circular, permitting the adjustment button (3) to be turned clockwise and anticlockwise. Figure 3 is a perspective view from the front of the control panel (11) which is the subject of the invention in which the button socket (2) of a domestic appliance (1) is to be fixed. As may be seen from the figure provided, two lugs (111) have been formed which project from the openings (110) perpendicularly into the interior of the control panel (11). The button socket (2) which is the subject of the invention is fixed in the control panel (11) by fitting it into the opening (110) in direction I (the initial direction of linear fitting) and then turning it in direction II (the clockwise turning direction).

Figure 4 is a detail of a control panel (11) such as that in Figure 3. It is a detail of a lug (111) and a locking guide (112) on the lug (111). The locking guide (112) is a channel which starts at an opening from a lateral side of the lug (111) and continues therefrom. It is a guide which is basically the shape of a letter "L". The start section is an entry opening (1120) and the part continuing from the entry opening (1120) forms a tolerance opening (1121). The tolerance opening (1121) is basically at 90° to the entry opening (1120). The fact that the tolerance opening (1121) is formed so as to be longer on the linear axis than the entry opening (1120) is what provides the fixing tolerance of the button socket (2) and the tight locking, rather than the angle between them.

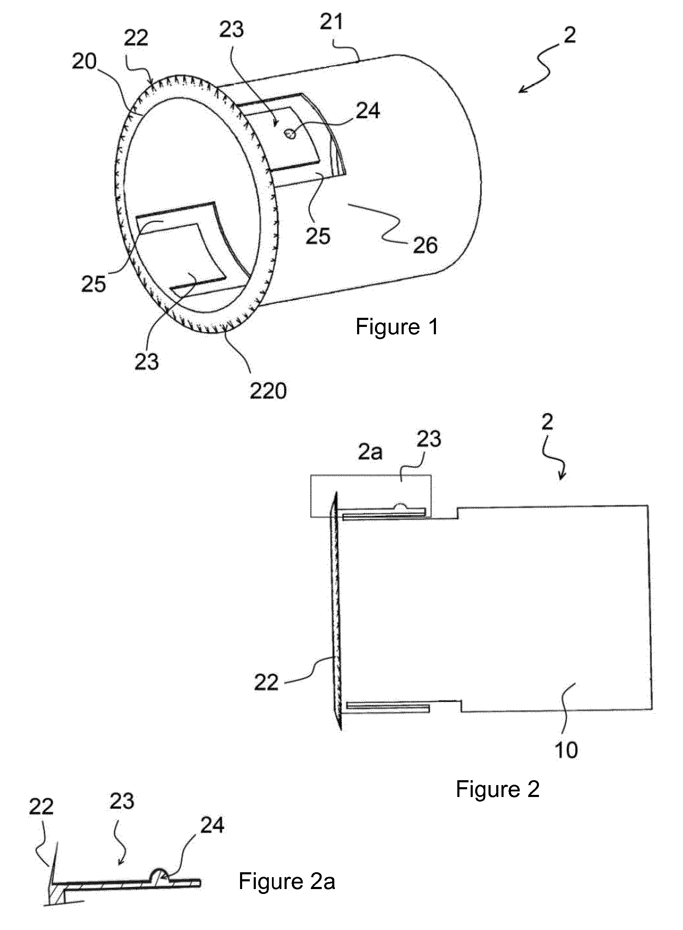

Figure 1 is a perspective view from the front of the button socket (2) for the domestic appliance (1) which is the subject of the invention. As will be seen from the figure given, the button socket (2) has a cylindrical form with both opposing ends open. The button socket (2) in general terms comprises a body (21) with a mouth section (20) at one end which serves to admit the adjustment button (3). A flange (22) is formed in the mouth section (20). The flange (22) is formed of a periphery which has an angled section with a reducing outward angle (220) extending away from the mouth section (20).

Figure 2 is a two-dimensional side view of the button socket (2) for a domestic appliance (1) which is the subject of the invention. Figure 2a is a cross section of the area marked 2a on Figure 2. Two corresponding locking sections (23) have been cut on the body (21) behind the flange (22) of the button socket (2). The locking sections (23) have each been formed by means of a "U" shaped cut-out (25) on the periphery (26) of the body (21). A projection (24) has been formed on the locking section (23) to extend outward from the periphery (26) of the body (21). The form of the projection (24) is circular.

Figure 6 is a perspective view from the front of a domestic appliance (1) which is an oven with a cooker-top. As may be seen from the figure shown, adjustment buttons (3) have been fitted to the front face of the control panel (11).

There follows a detailed account of the operation of the invention. The button socket (2) is fitted into the opening (110) of the control panel (11) in the linear initial fitting direction (I) of the control panel (11). During the fitting, the button socket (2), after being pushed into the control panel (11) in direction I, is turned clockwise in the turning direction II in order to fix it. Meanwhile the locking sections (23) created in the periphery (26) of the button socket (2) are brought into position with the two lugs (111) in the opening (110). After the lugs (111) and the locking sections (23) have been brought to meet each other, the projection (24) on the locking section (23) aligns with the entry opening (1120) so that it enters through the entry opening (1120) of the locking guide (112). When it meets the entry opening (1120), the projection (24) proceeds into the tolerance opening (1121) of the locking guide (112), taking advantage of the flexibility of the part with the flange (22) and benefitting from the tolerance provided by the flange (22) of the button socket (2). This is the button socket (2) coming forward to the extent of the tolerance on the front of the control panel (11). In this way, locking is achieved by making use of the flexibility of the flange (22) in the linear direction, and the flexibility provided by the lugs (111) and the locking sections (23) during the circular turning motion. Thus, the firm fixing of the button socket (2) in the control panel (11) is achieved. Partial independence of the locking sections (23) from the body (10) is provided due to the flexibility of the locking sections (23) and the cut-outs (25). At the same time, the fact that the flange (22) has an angled portion of the mouth section (20) with a reducing outward angle (220) closes off any potential gap arising from a discrepancy in diameter between the mouth section (20) of the button socket (2) and the control panel (11) opening (110). The fact that the angled section (220) will close the whole of the circumference of the button socket (2) by coming into contact with the control panel (11) provides a seal at this section.

### REFERENCE NUMBERS

- 1.: Domestic appliance
- 10.: Body
- 11.: Control panel
- 110.: Opening
- 111.: Lugs
- 112.: Locking guide
- 1120.: Entry opening
- 1121.: Tolerance opening
- 2.: Button socket
- 20.: Mouth section
- 21.: Body
- 22.: Flange
- 220.: Angled section
- 23.: Locking section
- 24.: Projection
- 25.: Cut-out
- 26.: Periphery
- 3.: Adjustment button
- I.: Linear initial fitting direction
- II.: Clockwise turning direction

## Claims

1. A domestic appliance (1) which has a control panel (11), and a button socket (2) fixed to the control panel (11) which houses an adjustment button (3) which passes through an opening (110) on the control panel (11) **characterized in that** in order to provide firm fixing of the button socket (2) of the domestic appliance in the control panel (11), the control panel (11) includes at least one lug (111) possessing at least one locking guide (112) projecting inward from a periphery of the opening (110) of the control panel (11) and a projection (24) which passes into the locking guide (112) on the lug (111), being formed on a periphery (26) of the button socket (2) to engage with the lug (111).

2. The domestic appliance (1) as claimed in claim 1, **characterized in that** it includes two projections (24) formed on the periphery (26) of the button socket (2) of the domestic appliance (1) and two lugs (111) formed at such a distance from one another on the periphery (26) of the opening (110) of the control panel (11) that they radially engage with (2) them.

3. The domestic appliance (1) as claimed in any one of the previous claims, **characterized in that** there is a locking section (23) partially separated from the body (21), formed by a cut-out (25) from the body (21) of the button socket (2) in order to provide flexibility to an area formed on the periphery (26) of a button socket (2) of the domestic appliance (1) which has a projection (24).

4. The domestic appliance (1) as claimed in claim 3, **characterized in that** the locking section (23) and the lugs (111) are formed in such a way that they flex to align with each other.

5. The domestic appliance (1) as claimed in any one of the previous claims, **characterized in that** the projection (24) on the locking section (23) is circular.

6. The domestic appliance (1) as claimed in any one of the previous claims, **characterized in that** the button socket (2) includes a flange (22) formed around the mouth (20) section of the same which restricts the linear axial movements of the button socket (2).

7. The domestic appliance (1) as claimed in claim 6, **characterized in that** the flange (22) includes an angled section (220) with an angle which reduces outward from the mouth section (20).

8. The domestic appliance (1) as claimed in any one of the previous claims, **characterized in that** the locking guide (112) on the lug (111) is in the shape of a letter "L".

9. The domestic appliance (1) as claimed in claim 8, **characterized in that** the locking guide (112) includes an entry opening (1120) and a tolerance opening (1121) which continues in a manner which is at an angle to the entry opening (1120).

10. The domestic appliance (1) as claimed in claims 8 and 9, **characterized in that** the length of the tolerance opening (1121) is formed in such a way that it is longer on the linear axis than the length of the entry opening (1120).

11. The domestic appliance (1) as claimed in any one of the previous claims, **characterized in that** the button socket (2) is one-piece.

12. The domestic appliance (1) as claimed in any one of the previous claims, **characterized in that** the control panel (11) with lugs (111) is one-piece.

13. The domestic appliance (1) as claimed in any one of the previous claims, **characterized in that** the said domestic appliance (1) is a cooker-top.
